# EUROPEAN PATENT APPLICATION

(11) **EP 4 283 732 A1**
(43) Date of publication of application: **29.11.2023**
(21) Application number: 23172751.2
(22) Date of filing: 11.05.2023
(51) Int. Cl.: H01M 10/04, H01M 50/105, H01M 50/531, H01M 50/538

(54) **SECONDARY BATTERY**

(30) Priority: 24.05.2022 KR 20220063251
(71) Applicant: Samsung SDI Co., Ltd., Yongin-si, Gyeonggi-do 17084 (KR)
(72) Inventor: RO, Dae Sung, 17084 Yongin-si (KR)
(74) Representative: Marks & Clerk LLP

(57) **Abstract**

A secondary battery includes an electrode assembly including a negative electrode plate including a plurality of first negative electrode substrate tabs and a plurality of second negative electrode substrate tabs, a positive electrode plate including a plurality of first positive electrode substrate tabs and a plurality of second positive electrode substrate tabs, and a separator between the negative electrode plate and the positive electrode plate; a pouch accommodating the electrode assembly; a first strip terminal electrically connected to the plurality of first negative electrode substrate tabs and the plurality of second negative electrode substrate tabs; and a second strip terminal electrically connected to the plurality of first positive electrode substrate tabs and the plurality of second positive electrode substrate tabs.

## Description

### BACKGROUND

### 1. Field

Embodiments relate to a secondary battery.

### 2. Description of the Related Art

A secondary battery may be configured such that an electrode assembly is formed by winding or stacking a positive electrode, a negative electrode, and a separator between the positive electrode and the negative electrode, to then be sealed in a can or pouch together with an electrolyte.

An electrode assembly may include a negative electrode plate having a negative electrode active material layer on a thin-film electrode current collector and a positive electrode plate having a positive electrode active material layer on a thin-film electrode current collector. An uncoated portion (on which an active material layer is not formed) may be on the negative electrode plate and the positive electrode plate, and a plurality of substrate tabs may be formed by processing the uncoated portion. The plurality of substrate tabs may be gathered at one side of the electrode assembly and welded to an external tab, e.g., a strip terminal, to then be bent and inserted into the pouch. A space in which the bent substrate tabs are accommodated may be formed in the pouch.

The above information disclosed in this Background section is only for enhancement of understanding of the background and therefore it may contain information that does not constitute prior art.

### SUMMARY

The embodiments may be realized by providing a secondary battery including an electrode assembly including a negative electrode plate including a plurality of first negative electrode substrate tabs and a plurality of second negative electrode substrate tabs, a positive electrode plate including a plurality of first positive electrode substrate tabs and a plurality of second positive electrode substrate tabs, and a separator between the negative electrode plate and the positive electrode plate; a pouch accommodating the electrode assembly; a first strip terminal electrically connected to the plurality of first negative electrode substrate tabs and the plurality of second negative electrode substrate tabs; and a second strip terminal electrically connected to the plurality of first positive electrode substrate tabs and the plurality of second positive electrode substrate tabs.

The electrode assembly may be a wound electrode assembly or a stacked electrode assembly.

The plurality of first negative electrode substrate tabs may be spaced apart from the plurality of second negative electrode substrate tabs in a horizontal direction.

The plurality of first negative electrode substrate tabs and the plurality of second negative electrode substrate tabs may be simultaneously electrically connected to a single first strip terminal.

The plurality of first positive electrode substrate tabs may be spaced apart from the plurality of second positive electrode substrate tabs in a horizontal direction.

The plurality of first positive electrode substrate tabs and the plurality of second positive electrode substrate tabs may be simultaneously electrically connected to a single second strip terminal.

One of the negative electrode plate and the positive electrode plate may be thicker than the other of the negative electrode plate and the positive electrode plate, and a number of substrate tabs on the thicker one of the negative electrode plate and the positive electrode plate may be greater than a number of substrate tabs on the other of the negative electrode plate and the positive electrode plate.

The embodiments may be realized by providing a secondary battery including an electrode assembly including a negative electrode plate having a plurality of first negative electrode substrate tabs to a plurality of N-th negative electrode substrate tabs, a positive electrode plate having a plurality of first positive electrode substrate tabs to a plurality of M-th positive electrode substrate tabs, and a separator between the negative electrode plate and the positive electrode plate; a pouch accommodating the electrode assembly; a first strip terminal electrically connected to the plurality of first negative electrode substrate tabs to the plurality of N-th negative electrode substrate tabs; and a second strip terminal electrically connected to the plurality of first positive electrode substrate tabs and the plurality of M-th positive electrode substrate tabs.

N and M may be each independently an integer of 2 to 4.

N and M may be the same.

N and M may be different.

One of the negative electrode plate and the positive electrode plate may be thicker than the other of the negative electrode plate and the positive electrode plate, and a number of substrate tabs on the thicker one of the negative electrode plate and the positive electrode plate may be greater than a number of substrate tabs on the other of the negative electrode plate and the positive electrode plate.

At least some of the above and other features of the invention are set out in the claims.

### BRIEF DESCRIPTION OF DRAWINGS

Features will be apparent to those of skill in the art by describing in detail embodiments with reference to the attached drawings in which:
FIG. 1 is a perspective view illustrating a secondary battery according to an embodiment of the present disclosure.
FIG. 2 is a perspective view schematically illustrating the electrode assembly according to FIG. 1.
FIGS. 3A and 3B are side views schematically illustrating stages in a method of welding and bending the electrode assembly and strip terminals according to FIG. 2.
FIG. 4 is a front view schematically illustrating a welding structure of substrate tabs and strip terminals according to FIG. 3A.
FIGS. 5A to 5D are front views respectively illustrating first and second negative electrode plates and first and second positive electrode plates of an electrode assembly according to another embodiment of the present disclosure.
FIG. 6 is a front view schematically illustrating a welding structure of substrate tabs and strip terminals according to another embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

In addition, in the accompanying drawings, sizes or thicknesses of various components are exaggerated for brevity and clarity. Like numbers refer to like elements throughout. As used herein, the terms "or" and "and/or" are not exclusive terms, and include any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise", "include", "comprising" or "including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

Hereinafter, a secondary battery according to an embodiment of the present disclosure will be described in detail with reference to the accompanying drawings.

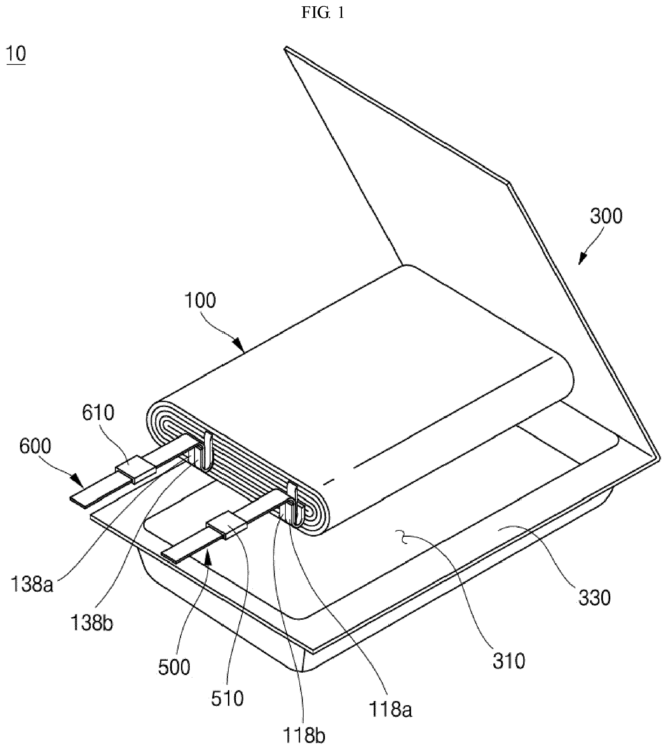

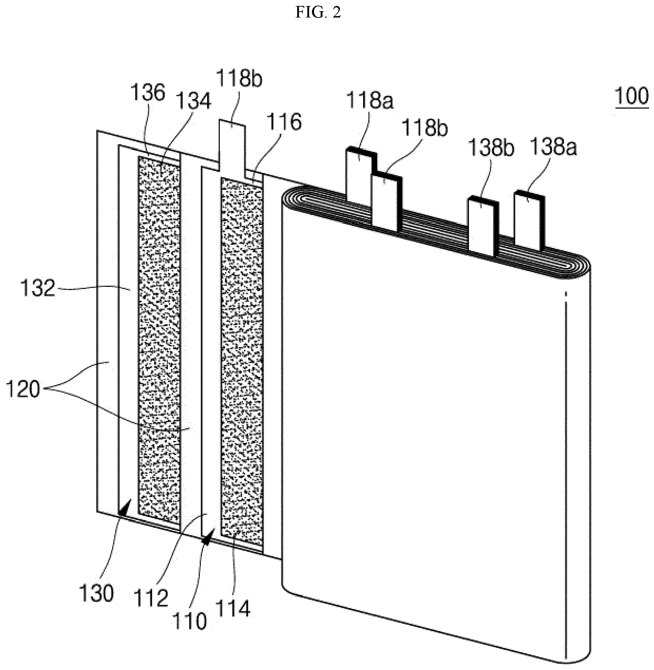

FIG. 1 is a perspective view illustrating a secondary battery according to an embodiment of the present disclosure. FIG. 2 is a perspective view schematically illustrating the electrode assembly according to FIG. 1.

As shown in FIG. 1, the secondary battery 10 according to an embodiment of the present disclosure may include an electrode assembly 100 and a pouch 300 accommodating the electrode assembly 100.

The electrode assembly 100 may be formed by winding or stacking a stack of a negative electrode plate 110, a separator 120, and a positive electrode plate 130, which may be formed in a thin or film shape. In an implementation, the electrode assembly 100 may be of a winding type formed by winding. The negative electrode plate 110 and the positive electrode plate 130 may be electrically connected to the outside of the secondary battery 10 by a first strip terminal 500 and a second strip terminal 600, respectively. The electrode assembly 100 may be referred to as a jelly roll.

The negative electrode plate 110 may be formed by coating a negative electrode active material 114 (e.g., graphite or carbon) on a negative electrode current collector 112 formed of a metal foil such as copper, a copper alloy, nickel, or a nickel alloy. A negative electrode uncoated portion 116, to which the negative electrode active material 114 is not applied, may be in a region of the negative electrode current collector 112. A plurality of first negative electrode substrate tabs 118a and a plurality of second negative electrode substrate tabs 118b may be on the negative electrode uncoated portion 116 in a width direction of the negative electrode current collector 112. In an implementation, the first and second negative electrode substrate tabs 118a and 118b may be formed by pressing the negative electrode uncoated portion 116 with a press to leave a predetermined pattern. In an implementation, the first and second negative electrode substrate tabs 118a and 118b may have a rectangular shape. The plurality of first and second negative electrode substrate tabs 118a and 118b may extend to the outside of the negative electrode current collector 112 (extending upwardly with reference to FIG. 2).

As the electrode assembly 100 is wound, the plurality of first negative electrode substrate tabs 118a may be aligned and stacked one on another, and the plurality of second negative electrode substrate tabs 118b may be stacked one on another (Hereinafter, the meaning of 'stacking' of substrate tabs encompass stacking at a predetermined distance but also stacking with a difference in height at the same location.). The first and second negative electrode substrate tabs 118a and 118b may be passages for current flow between the negative electrode plate 110 and the first strip terminal 500. The plurality of stacked first negative electrode substrate tabs 118a and the plurality of stacked second negative electrode substrate tabs 118b may be spaced apart from a plurality of stacked first positive electrode substrate tabs 138a and a plurality of stacked second positive electrode substrate tab 138b of the positive electrode plates 130, which are described below, so as not to overlap. In an implementation, all of the substrate tabs arranged in two rows on the left side of the electrode assembly 100 in FIG. 2 may be the negative electrode substrate tabs 118a and 118b, and all of the substrate tabs arranged in two rows on the right side of the electrode assembly 100 may be the positive electrode substrate tabs 138a and 138b.

In an implementation, the plurality of stacked first negative electrode substrate tabs 118a and the plurality of stacked second negative electrode substrate tabs 118b may be spaced apart from each other in a horizontal direction, e.g., in a direction perpendicular to the winding axis in FIG. 2. In an implementation, when the plurality of stacked first negative electrode substrate tabs 118a and the plurality of stacked second negative electrode substrate tabs 118b are electrically connected to one single first strip terminal 500 at the same time, a thickness may be reduced by reducing the number of negative electrode substrate tabs 118a and 118b to be stacked. Therefore, as will be described below, the thickness after bending of the welded negative electrode substrate tabs 118a and 118b and the first strip terminal 500 may be reduced.

The separator 120 may be between the negative electrode plate 110 and the positive electrode plate 130 to help prevent a short circuit between the negative electrode plate 110 and the positive electrode plate 130 and to facilitate the movement of lithium ions. In an implementation, the separator 120 may be larger than the negative electrode plate 110 and the positive electrode plate 130. In an implementation, the separator 120 may be made of, e.g., polyethylene, polypropylene, or a composite film of polyethylene and polypropylene.

The positive electrode plate 130 may be formed by coating a positive electrode active material 134 (e.g., a transition metal oxide) on a positive electrode current collector 132 formed of a metal foil such as aluminium or an aluminium alloy. A positive electrode uncoated portion 136 to which the positive electrode active material 134 is not applied may be in a region of the positive electrode current collector 132. A plurality of first positive electrode substrate tabs 138a and a plurality of second positive electrode substrate tabs 138b may be on the positive electrode uncoated portion 136 in the width direction of the positive electrode current collector 132. In an implementation, the first and second positive electrode substrate tabs 138a and 138b may be formed by pressing the positive electrode uncoated portion 136 with a press to leave a predetermined pattern. In an implementation, the first and second positive electrode substrate tabs 138a and 138b may have a rectangular shape. The plurality of first and second positive electrode substrate tabs 138a and 138b may extend to the outside of the positive electrode current collector 132 (extending upwardly with reference to FIG. 2).

As the electrode assembly 100 is wound, the plurality of first positive electrode substrate tabs 138a may be aligned and stacked to or on each other, and the plurality of second positive electrode substrate tabs 138b may be aligned and stacked on each other. The first and second positive electrode substrate tabs 138a and 138b may be passages for current flow between the positive electrode plate 130 and the second strip terminal 600. As described above, the plurality of stacked first positive electrode substrate tabs 138a and the plurality of stacked second positive electrode substrate tabs 138b may be spaced apart from the plurality of stacked first negative electrode substrate tabs 118a and the plurality of stacked second negative electrode substrate tabs 118b so as not to overlap.

In an implementation, the plurality of stacked first positive electrode substrate tabs 138a and the plurality of stacked second positive electrode substrate tabs 138b may be spaced apart from each other in a horizontal direction, e.g., in a direction perpendicular to the winding axis in FIG. 2. Accordingly, when the plurality of stacked first positive electrode substrate tabs 138a and the plurality of stacked second positive electrode substrate tabs 138b are electrically connected to one single second strip terminal 600 at the same time, the thickness may be reduced by reducing the number of stacked positive electrode substrate tabs 138a and 138b. Therefore, as will be described below, the thickness after bending of the welded positive electrode substrate tabs 138a and 138b and the second strip terminal 600 may be reduced.

In an implementation, a number of the plurality of first negative electrode substrate tabs 118a and the plurality of second negative electrode substrate tabs 118b may be the same as a number of the plurality of first positive electrode substrate tabs 138a and the plurality of second positive electrode substrate tabs 138b. In an implementation, the number of the plurality of first negative electrode substrate tabs 118a and the plurality of second negative electrode substrate tabs 118b may be different from the number of the plurality of first positive electrode substrate tabs 138a and the plurality of second positive electrode substrate tabs 138b. In an implementation, the number of substrate tabs on a thicker side of the negative electrode plate 110 and the positive electrode plate 130 may be greater.

The electrode assembly 100 having such a structure may be accommodated in the pouch 300 together with an electrolyte. As shown in FIG. 1, the pouch 300 may have an accommodating space in which the electrode assembly 100 may be accommodated. The pouch 300 may be referred to as a laminate exterior material, a case, a pouch exterior material, a pouch case, or the like. The pouch 300 may have a recess 310 on one surface by bending plate-shaped exterior materials to face each other and then pressing or drawing one surface. The electrode assembly 100 may be accommodated in the recess 310. A sealing part 330 may be on the outer periphery of the recess 310, and the sealing part 330 may be sealed by thermal fusion or the like in a state in which the electrode assembly 100 is accommodated in the recess 310.

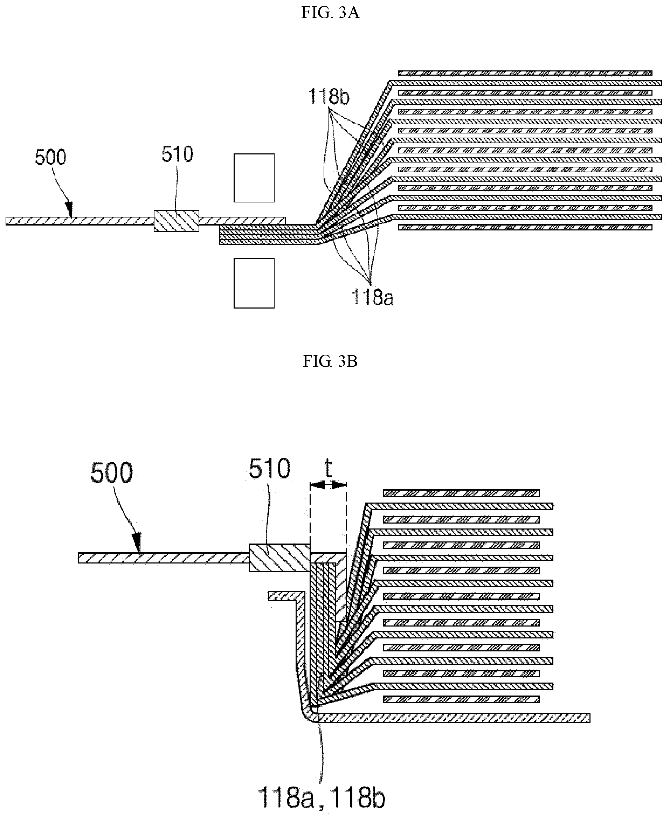

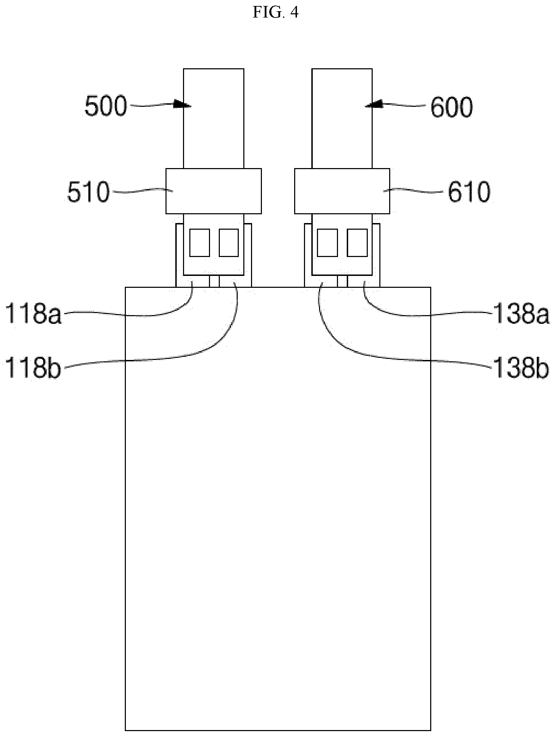

FIGS. 3A and 3B are side views schematically illustrating stages in a method of welding and bending the electrode assembly and strip terminals according to FIG. 2. FIG. 4 is a front view schematically illustrating a welding structure of substrate tabs and strip terminals according to FIG. 3A.

Hereinafter, a method of welding and bending the negative electrode substrate tabs 118a and 118b and the first strip terminal 500 in the electrode assembly 100 having the above-described structure will be described in detail. For convenience, the side surfaces of the negative electrode substrate tabs 118a and 118b will be illustrated and described, but the same may be applied to the method of welding and bending the positive electrode substrate tabs 138a and 138b and the second strip terminal 600.

As shown in FIG. 3A, the plurality of first negative electrode substrate tabs 118a of the electrode assembly 100 (e.g., before welding) may be gathered together or in one place, and the plurality of second negative electrode substrate tabs 118b may also be gathered together or in one place. This is for gathering the plurality of first negative electrode substrate tabs 118a and the plurality of second negative electrode substrate tabs 118b, respectively, and welding the same to the first strip terminal 500 at the same time. When the plurality of first negative electrode substrate tabs 118a are gathered to one side, the lengths thereof may be changed, and thus the ends of the plurality of first negative electrode substrate tabs 118a may be cut and trimmed to have the same length. Likewise, the plurality of second negative electrode substrate tabs 118b may also be cut and trimmed to have the same length. The gathered plurality of first negative electrode substrate tabs 118a and the gathered plurality of second negative electrode substrate tabs 118b may be (e.g., slightly) spaced apart from each other in the horizontal direction, and may be located at the about same height in the vertical direction.

After gathering the plurality of first negative electrode substrate tabs 118a and the plurality of second negative electrode substrate tabs 118b at the lower end of the electrode assembly 100, respectively, the first strip terminal 500 may be welded on the gathered first negative electrode substrate tabs 118a and the second negative electrode substrate tabs 118a. In an implementation, the welding may be laser welding or ultrasonic welding. The first strip terminal 500 may electrically connect the outside of the secondary battery 10 (e.g., a load) with the negative electrode substrate tabs 118a and 118b. The first strip terminal 500 may be in the form of a thin foil or film, and may include a first insulating portion 510 for insulation from the pouch 300. As shown in FIG. 1, the first insulating portion 510 may be at a region in contact with the pouch 300.

In an implementation, as shown in FIG. 4, the first strip terminal 500 may have a width corresponding to a width ranging from or spanning across the first negative electrode substrate tabs 118a to the second negative electrode substrate tabs 118b. In an implementation, regions where welding is performed may be a region in which the first strip terminal 500 and the first negative electrode substrate tabs 118a are in contact with each other and a region in which the first strip terminal 500 and the second negative electrode substrate tabs 118b are in contact with each other. The shapes of welding spots may appear in various ways depending on the setting of a laser welding apparatus, e.g., a plurality of points, a plurality of straight lines or curves, or a specific figure.

When the welding of the first strip terminal 500 is completed, as shown in FIG. 3B, the negative electrode substrate tabs 118a and 118b and the first strip terminal 500 may be bent. In an implementation, the plurality of first negative electrode substrate tabs 118a and the plurality of second negative electrode substrate tabs 118b may be respectively spaced apart from each other in the horizontal direction and stacked at different positions, a number of substrate tabs stacked may be reduced, compared to a case of stacking all in one place, and as a result, the thickness (t) after bending of substrate tabs may be reduced.

Likewise, the second strip terminal 600 having a second insulating portion 610 may be welded on the plurality of first positive electrode substrate tabs 138a and the plurality of second positive electrode substrate tabs 138b, which may be gathered at the lower end of the electrode assembly 100. When the welding of the second strip terminal 600 is completed, the positive electrode substrate tabs 138a and 138b and the second strip terminal 600 may be bent. Thereafter, the electrode assembly 100 may be accommodated in the pouch 300. As described above, the thickness of the substrate tabs may be reduced after bending, and the space occupied by the bent substrate tabs in the pouch 300 may be reduced, thereby increasing the internal space utilization efficiency, and increasing the capacity of a secondary battery. In an implementation, a total height of the secondary battery 10 may be about 40 mm and the bending space may additionally secure about 0.2 mm of space, and the capacity may be increased by about 0.6% compared to before securing the additional bending space. In addition, by welding a small number of stacked substrate tabs with a strip terminal, less energy may be used, and thus the size of equipment can be reduced.

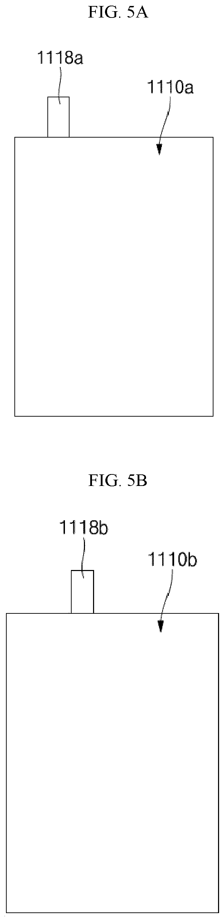

FIGS. 5A to 5D are front views respectively illustrating first and second negative electrode plates and first and second positive electrode plates of an electrode assembly according to another embodiment of the present disclosure.

The electrode assembly according to a second embodiment of the present disclosure may be similarly accommodated in the pouch, and in the present embodiment, the electrode assembly may be of a stack type formed by stacking a plurality of first and second negative electrode plates 11 10a and 1110b, a plurality of separators, and a plurality of first and second positive electrode plates 1130a and 1130b, which are formed in a thin foil or film shape. The plurality of first and second negative electrode plates 1110a, 11 10b and the plurality of first and second positive electrode plates 1130a, 1130b may be electrically connected to the outside of the secondary battery by a first strip terminal and a second strip terminal, respectively.

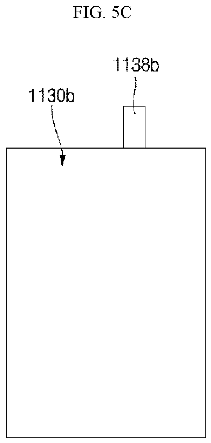

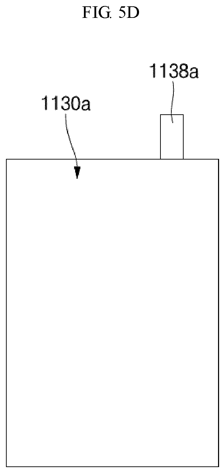

As shown in FIGS. 5A and 5B, first negative electrode substrate tabs 1118a may be on each of the first negative electrode plates 11 10a, and second negative electrode substrate tabs 1118b may be on each of the second negative electrode plates 11 10b. As the electrode assembly is stacked, the plurality of first negative electrode substrate tabs 1118a may be aligned and stacked one on another, and the plurality of second negative electrode substrate tabs 1118b may be aligned and stacked one on another. As shown in FIGS. 5C and 5D, first positive electrode substrate tabs 1138a may be on each of the first positive electrode plates 1130a, and second positive electrode substrate tabs 1138b may be on each of the second positive electrode plates 1130b. As the electrode assembly is stacked, the plurality of first positive electrode substrate tabs 1138a may be aligned and stacked one on another, and the plurality of second positive electrode substrate tabs 1138b may be aligned and stacked one on another. The plurality of separators may be between adjacent ones of the negative electrode plates 1110a and 1110b and the positive electrode plates 1130a and 1130b. In an implementation, the positions of the plurality of stacked first negative electrode substrate tabs 1118a, the plurality of stacked second negative electrode substrate tabs 1118b, the plurality of stacked first positive electrode substrate tabs 1138a, and the plurality of stacked second positive electrode 1138b may be the same as described in the first embodiment.

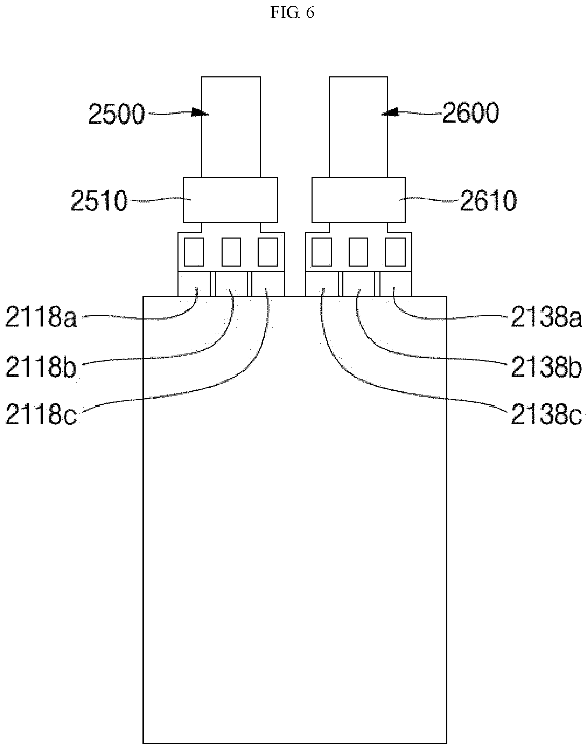

FIG. 6 is a front view schematically illustrating a welding structure of substrate tabs and strip terminals according to another embodiment of the present disclosure.

The electrode assembly according to the present embodiment may be formed the same as the electrode assembly according to the first embodiment except for the number of negative electrode substrate tabs and positive electrode substrate tabs. In an implementation, a negative electrode plate may include a plurality of first negative electrode substrate tabs to a plurality of N-th negative electrode substrate tabs. In an implementation, a negative electrode plate may include a plurality of first positive electrode substrate tabs to a plurality of M-th positive electrode substrate tabs. In an implementation, N and M may each independently be an integer of 2 to 4. In an implementation, N and M may be the same. In an implementation, N and M may be different.

In an implementation, a negative electrode plate may include a plurality of first negative electrode substrate tabs 2118a, a plurality of second negative electrode substrate tabs 2118b, and a plurality of third negative electrode substrate tabs 2118c (e.g., N is 3). As the electrode assembly is wound, the plurality of first negative electrode substrate tabs 2118a may be aligned and stacked one on another, the plurality of second negative electrode substrate tabs 2118b may be aligned and stacked one on another, and the plurality of third negative electrode substrate tabs 2118c may be aligned and stacked one on another. In an implementation, the plurality of stacked first negative electrode substrate tabs 2118a, the plurality of stacked second negative electrode substrate tabs 2118b, and the plurality of stacked third negative electrode substrate tabs 2118c may be (e.g., laterally) spaced apart from each other in a horizontal direction.

The positive electrode plate may include a plurality of first positive electrode substrate tabs 2138a, a plurality of second positive electrode substrate tabs 2138b, and a plurality of third positive electrode substrate tabs 2138c (e.g., M is 3). As the electrode assembly is wound, the plurality of first positive electrode substrate tabs 2138a may be aligned and stacked one on another, the plurality of second positive electrode substrate tabs 2138b may be aligned and stacked one on another, and the plurality of third positive electrode substrate tabs 2138c may be aligned and stacked one on another. In an implementation, the plurality of stacked first positive electrode substrate tabs 2138a, the plurality of stacked second positive electrode substrate tabs 2138b, and the plurality of stacked third positive electrode substrate tabs 2138c may be spaced apart from each other in a horizontal direction.

The plurality of first negative electrode substrate tabs 2118a, the plurality of second negative electrode substrate tabs 2118b, and the plurality of third negative electrode substrate tabs 2118c may be all welded to one single first strip terminal 2500. In an implementation, in order to facilitate welding in all of a region in which the first strip terminal 2500 and the first negative electrode substrate tabs 2118a are in contact with each other, a region in which the first strip terminal 2500 and the second negative electrode substrate tabs 2118b are in contact with each other, and a region in which the first strip terminal 2500 and the third negative electrode substrate tabs 2118c are in contact with each other, a width of a portion of the first strip terminal 2500 (where welding is to be performed) may be greater than the width of the remaining or other portion (e.g., distal to the electrode assembly).

Likewise, the plurality of first positive electrode substrate tabs 2138a, the plurality of second positive electrode substrate tabs 2138b, and the plurality of third positive electrode substrate tabs 2138c may be all welded to one single second strip terminal 2600. In an implementation, in order to facilitate welding in all of a region in which the second strip terminal 2600 and the first positive electrode substrate tabs 2138a are in contact with each other, a region in which the second strip terminal 2600 and the second positive electrode substrate tabs 2138b are in contact with each other, and a region in which the second strip terminal 2600 and the third positive electrode substrate tabs 2138c are in contact with each other, a width of a portion of the second strip terminal 2600 (where welding is to be performed) may be greater than the width of the remaining or other portion.

By way of summation and review, in order to increase the capacity of the secondary battery, the size of the electrode assembly may be increased, e.g., the number of substrate tabs stacked may increase. Welding with strip terminals could require a greater amount of energy, and due to the increase in thickness when bending after welding with the strip terminals, the usable area inside the pouch could be reduced. The accommodating space of the substrate tabs could hinder the capacity increase of the secondary battery. Accordingly, the space for accommodating the substrate tabs may be minimized.

As described above, according to an embodiment of the present disclosure, after reducing the number and thickness of substrate tabs stacked by forming the substrate tabs in two or more regions, the substrate tabs may be welded to one strip terminal to minimize the thickness after bending of the substrate tabs, and thus the usable space inside the pouch may be increased, and the capacity of the secondary battery may be increased accordingly.

In addition, by welding a reduced number of stacked substrate tabs with strip terminals, less energy may be required, and thus the size of equipment may be reduced.

One or more embodiments may provide a secondary battery capable of increasing battery capacity by minimizing the thicknesses of substrate tabs after bending.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
an electrode assembly including:
a negative electrode plate including a plurality of first negative electrode substrate tabs and a plurality of second negative electrode substrate tabs,
a positive electrode plate including a plurality of first positive electrode substrate tabs and a plurality of second positive electrode substrate tabs, and
a separator between the negative electrode plate and the positive electrode plate;
a pouch accommodating the electrode assembly;
a first strip terminal electrically connected to the plurality of first negative electrode substrate tabs and the plurality of second negative electrode substrate tabs; and
a second strip terminal electrically connected to the plurality of first positive electrode substrate tabs and the plurality of second positive electrode substrate tabs.

2. The secondary battery as claimed in claim 1, wherein the electrode assembly is a wound electrode assembly or a stacked electrode assembly.

3. The secondary battery as claimed in claim 1 or claim 2, wherein the plurality of first negative electrode substrate tabs are spaced apart from the plurality of second negative electrode substrate tabs in a horizontal direction.

4. The secondary battery as claimed in claim 3, wherein the plurality of first negative electrode substrate tabs and the plurality of second negative electrode substrate tabs are simultaneously electrically connected to a single first strip terminal.

5. The secondary battery as claimed in any one of claims 1 to 4, wherein the plurality of first positive electrode substrate tabs are spaced apart from the plurality of second positive electrode substrate tabs in a horizontal direction.

6. The secondary battery as claimed in claim 5, wherein the plurality of first positive electrode substrate tabs and the plurality of second positive electrode substrate tabs are simultaneously electrically connected to a single second strip terminal.

7. The secondary battery as claimed in any one of claims 1 to 6, wherein:
one of the negative electrode plate and the positive electrode plate is thicker than the other of the negative electrode plate and the positive electrode plate, and
a number of substrate tabs on the thicker one of the negative electrode plate and the positive electrode plate is greater than a number of substrate tabs on the other of the negative electrode plate and the positive electrode plate.

8. A secondary battery, comprising:
an electrode assembly including:
a negative electrode plate having a plurality of first negative electrode substrate tabs to a plurality of N-th negative electrode substrate tabs,
a positive electrode plate having a plurality of first positive electrode substrate tabs to a plurality of M-th positive electrode substrate tabs, and
a separator between the negative electrode plate and the positive electrode plate;
a pouch accommodating the electrode assembly;
a first strip terminal electrically connected to the plurality of first negative electrode substrate tabs to the plurality of N-th negative electrode substrate tabs; and
a second strip terminal electrically connected to the plurality of first positive electrode substrate tabs and the plurality of M-th positive electrode substrate tabs.

9. The secondary battery as claimed in claim 8, wherein N and M are each independently an integer of 2 to 4.

10. The secondary battery as claimed in claim 9, wherein N and M are the same.

11. The secondary battery as claimed in claim 9, wherein N and M are different.

12. The secondary battery as claimed in any one of claims 8 to 11, wherein:
one of the negative electrode plate and the positive electrode plate is thicker than the other of the negative electrode plate and the positive electrode plate, and
a number of substrate tabs on the thicker one of the negative electrode plate and the positive electrode plate is greater than a number of substrate tabs on the other of the negative electrode plate and the positive electrode plate.
